# EUROPEAN PATENT APPLICATION

(11) **EP 3 182 185 A1**
(43) Date of publication of application: **21.06.2017**
(21) Application number: 14895701.2
(22) Date of filing: 15.09.2014
(51) Int. Cl.: G02B 6/44

(54) **INTELLIGENT CONTROL APPARATUS AND INTELLIGENT OPTICAL DISTRIBUTION NETWORK DEVICE AND SYSTEM**

(30) Priority: 26.06.2014 CN 201420354394 U
(71) Applicant: ZTE Corporation, Shenzhen, Guangdong 518057 (CN)
(72) Inventor: ZHANG, Haowen, Shenzhen Guangdong 518057 (CN)
(74) Representative: Savi, Massimiliano
(86) International application number: PCT/CN2014/086526
(87) International publication number: WO 2015/196577

(57) **Abstract**

An intelligent control apparatus is disclosed in the utility model, including: a circuit board and a housing assembly; herein the housing assembly is a hollow structural body, and the circuit board is placed in the housing assembly; a first communication interface and a second communication interface are set on the circuit board; a first port and a second port are set on housing assembly; the first communication interface is electrically connected to an optical distribution network device via the first port; the second communication interface is electrically connected to an optical fiber plug via the second port; and the housing assembly is fixedly arranged on a fusion splice tray body of the optical distribution network device. An intelligent optical distribution network device and system are also disclosed in the utility model.

## Description

### Technical Field

The utility model relates to the field of optical communication technology, and in particular to an intelligent control apparatus, and an intelligent optical distribution network device and system.

### Background

An Intelligent Optical Distribution Network (IODN) device implements automated, intelligentized and flow management on optical distribution network resources by introducing the electronic tag technology into optical fiber jumper and pigtail, and optical cable cross connecting cabinet ports.

At present, a design method for the intelligent optical distribution network device is: all or partly removing an upper cover plate of a fusion splice tray body of a traditional optical distribution network device and then installing a new intelligent fusion splice tray cover plate. The existing intelligent fusion splice tray cover plate is composed of an upper cover structure component and an electronic component. For example, the electronic component may be a Printed Circuit Board (PCB) or a circuit mainly constituted by flat cables. Herein, the electronic component is arranged above the upper cover structure component; the upper cover structure component is customized according to an external dimension of the upper cover plate of the fusion splice tray body of the traditional optical distribution network device, and it normally uses plastic materials and needs mould design and manufacturing. And exterior of the electronic component is also customized according to the exterior of the upper cover structure component, and it is used for implementing functions of intelligently detecting optical electronic tags, electrically connecting to a controller of the optical distribution network device and controlling a Light Emitting Diode (LED) of a front panel to light up or turn off.

However, the above design method for the intelligent optical distribution network device has the following problems:
(1) Both the upper cover structure component and the electronic component need to be customized according to the external dimension of the upper cover plate of the fusion splice tray body of the traditional optical distribution network device, but external dimensions of upper cover plates of fusion splice tray bodies of various brands and models are different, thus it is required to design various corresponding intelligent fusion splice tray cover plates according to the upper cover plates of the fusion splice tray bodies of various brands and models, otherwise a waste of manpower and resources is easily caused and it is also adverse to optical distribution network operators' unified management.
(2) The electronic component is entirely exposed in the air, thus static electricity discharge damage is easily caused to electronic elements on the electronic component during on-site installation.
(3) When the above intelligent fusion splice tray cover plate is installed on site, it is required to remove all or partly the upper cover plate of the original fusion splice tray body, but the upper cover plate of the original fusion splice tray body uses the plastic materials, and it is unrecyclable after being removed and is difficult to be degraded in the nature, which easily causes environmental pollution.

### Summary of the Invention

In view of this, embodiments of the utility model expect to provide an intelligent control apparatus, and an intelligent optical distribution network device and system.

An embodiment of the utility model provides an intelligent control apparatus, which includes: a circuit board and a housing assembly; herein the housing assembly is a hollow structural body, and the circuit board is placed in the housing assembly;
a first communication interface and a second communication interface are on the circuit board;
a first port and a second port are set on the housing assembly;
the first communication interface is electrically connected to an optical distribution network device via the first port; and the second communication interface is electrically connected to an optical fiber plug via the second port; and
the housing assembly is fixedly arranged on a fusion splice tray body of the optical distribution network device.

Furthermore, the apparatus further includes: at least one fastening piece;
one end of the fastening piece is fixedly connected to the housing assembly; and the other end of the fastening piece is fixedly connected to the fusion splice tray body of the optical distribution network device.

Furthermore, the fastening piece is a snap joint.

Furthermore, a mounting seat or a groove used for placing an optical fiber adapter is further set on the housing assembly.

Furthermore, a Light Emitting Diode LED light port is further set on the housing assembly.

Furthermore, an interspace used for an optical fiber to pass through is further set on the housing assembly.

An embodiment of the utility model further provides an intelligent optical distribution network device, which includes an optical distribution network device and the above intelligent control apparatus; herein,
the intelligent control apparatus is fixedly arranged on a fusion splice tray body of the optical distribution network device.

An embodiment of the utility model further provides an intelligent optical distribution network system, which includes: the above intelligent optical distribution network device, an intelligent management terminal device and an intelligent optical distribution network management; herein,
the intelligent optical distribution network device, the intelligent management terminal device and the intelligent optical distribution network management are orderly connected.

With the intelligent control apparatus, and the intelligent optical distribution network device and system provided in the embodiments of the utility model, the circuit board is avoided from being exposed in the air by placing the circuit board in the housing assembly so that electronic elements on the circuit board are safe from static electricity discharge damage, which solves the defects existing with respect to the intelligent optical distribution network in the existing technology.

In addition, by fixedly arranging the housing assembly on the fusion splice tray body of the optical distribution network device, the first communication interface of the circuit board is electrically connected to the optical distribution network device via the first port of the housing assembly. For example, the first communication interface of the circuit board is electrically connected to a controller of the optical distribution network device via the first port of the housing assembly. The second communication interface of the circuit board is electrically connected to the optical fiber plug via the second port of the housing assembly. For example, the second communication interface of the circuit board is electrically connected to an electronic tag on the optical fiber plug via the second port of the housing assembly; and it is only required to install the housing assembly on fusion splice tray bodies of traditional optical distribution network devices of various models in use without customizing intelligent fusion splice tray cover plates in different sizes according to external dimensions of upper cover plates of the fusion splice tray bodies of various traditional optical distribution network devices and without all or partly removing the upper cover plate of the original fusion splice tray body, thus management on the intelligent optical distribution network may be implemented and environmental pollution may be avoided.

### Brief Description of Drawings

In the drawings (not always drawn to scale), similar drawing marks may describe similar components in different views. Similar drawing marks with different letter suffixes may represent different examples of similar components. The drawings generally show various embodiments discussed in the utility model by means of examples but not limitations.
FIG. 1 is a schematic diagram of a structure of an intelligent control apparatus provided in an embodiment 1 of the utility model.
FIG. 2 is a schematic diagram of a structure of a housing assembly in the intelligent control apparatus provided in the embodiment 1 of the utility model.

### Specific Embodiments

### Embodiment 1

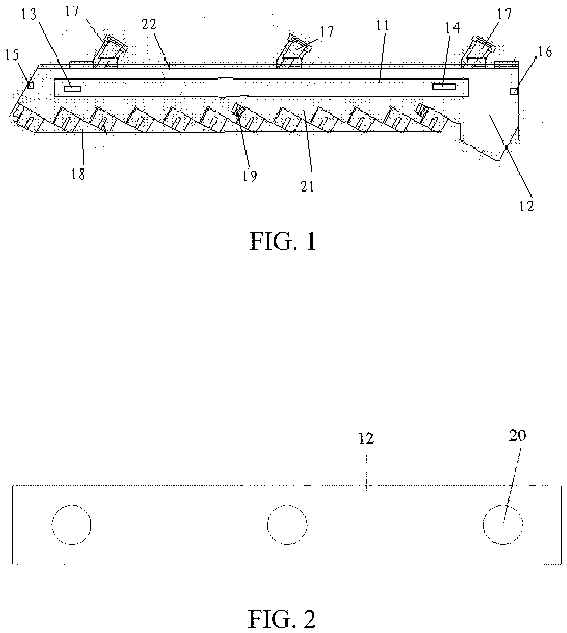

FIG. 1 is a schematic diagram of a structure of an intelligent control apparatus provided in an embodiment 1 of the utility model, FIG. 2 is a schematic diagram of a structure of a housing assembly in the intelligent control apparatus provided in the embodiment 1 of the utility model, in combination with FIG. 1 and FIG. 2, the intelligent control apparatus includes a circuit board 11 and a housing assembly 12, the housing assembly 12 is a hollow structural body, and the circuit board 11 is placed in the housing assembly 12; herein,
a first communication interface 13 and a second communication interface 14 are set on the circuit board 11.

Here, the circuit board 11 may be a PCB circuit board, a shape of the circuit board 11 is not always a cubic structure in the schematic diagram and it may be set according to the practical situations; the first communication interface 13 and the second communication interface 14 may be an RS485 communication interface, an I2C communication interface, a Universal Serial Bus (USB) communication interface or a Bluetooth communication interface and the like.

A first port 15 and a second port 16 are set on the housing assembly 12 and are respectively set corresponding to the first communication interface 13 and the second communication interface 14; the first communication interface 13 is electrically connected to an optical distribution network device via the first port 15, for example, the first communication interface 13 of the circuit board 11 is electrically connected to a controller of the optical distribution network device via the first port 15 of the housing assembly 12, the second communication interface 14 is electrically connected to an optical fiber plug via the second port 16, for example, the second communication interface 14 of the circuit board 11 is electrically connected to an electronic tag on the optical fiber plug via the second port 16 of the housing assembly 12.

The housing assembly 12 is fixedly arranged on a fusion splice tray body of the optical distribution network device.

Here, the housing assembly 12 may be a cubic structure but it is not limited to this; the electrical connection between the first communication interface 13 and the electronic tag on the optical fiber plug may be a 1-Wire communication connection, I2C communication connection, SPI communication connection and RFID communication connection and so on. The electrical connection between the second communication interface 14 and the controller of the optical distribution network device may be an RS485 communication connection, I2C communication connection, USB communication connection or Bluetooth communication connection.

In the embodiment of the present invention, the circuit board is placed in the housing assembly to avoid the circuit board from being exposed in the air, so that electronic elements on the circuit board are safe from static electricity discharge damage. In addition, by fixedly arranging the housing assembly on the fusion splice tray body of the optical distribution network device, the first communication interface of the circuit board is electrically connected to the optical distribution network device via the first port of the housing assembly, and the second communication interface of the circuit board is electrically connected to the optical fiber plug via the second port of the housing assembly. And it is only required to install the housing assembly on fusion splice tray bodies of traditional optical distribution network devices of various models in use without customizing intelligent fusion splice tray cover plates in different sizes according to external dimensions of upper cover plates of the fusion splice tray bodies of various traditional optical distribution network devices and without all or partly removing an upper cover plate of an original fusion splice tray body, thus not only management on the intelligent optical distribution network may be implemented but also environmental pollution may be avoided.

In one embodiment, the intelligent control apparatus also includes: at least one fastening piece 17.

Specifically, the fastening piece 17 may be a snap joint, one end of the fastening piece 17 is fixedly connected to the housing assembly 12, and the other end of the fastening piece 17 is fixedly connected to the fusion splice tray body of the optical distribution network device; or, the fastening piece 17 is directly placed in an optical fiber adapter slot on the fusion splice tray body of the optical distribution network device to fix the intelligent control apparatus on the fusion splice tray body of the optical distribution network device.

In one embodiment, provided with an optical fiber adapter mounting seat or groove 18 used for installing the optical fiber adapter may be further set on the housing assembly 12.

In one embodiment, a Light Emitting Diode LED light port 19 used for installing an LED light may be further set on the housing assembly 12.

In one embodiment, the housing assembly 12 may be further provided with an interspace 20 used for an optical fiber to pass through, a shape of the interspace 20 may be a circular structure as shown in FIG. 2 or other structure types, which is not limited specifically here.

The working principle of the intelligent control apparatus provided in the embodiment 1 of the utility model will be described in detail below.

The circuit board 11 is an electronic monitoring part of the intelligent control apparatus and it is mainly used for reading and writing information in a smart tag attached on an optical fiber header, a communication method for the circuit board 11 of the embodiment of the utility model and the smart tag is not limited to contact communication methods such as 1-Wire, I2C and SPI; it may also be non-contact communication methods such as RFID ISO15693, ISO14443 and ISO18000; the circuit board 11 sends the acquired smart tag information to the controller of the optical distribution network device, the controller sends a control command to the housing assembly 12 of the intelligent control apparatus after receiving the information, the control command is sent to the LED light via the LED light port 19 on the housing assembly 12, and the LED light lights up after receiving the control command to represent that communication is successful.

It should be noted that the first communication interface 13 of the circuit board 11 is electrically connected to the controller of the optical distribution network device via the first port 15 on the housing assembly 12, thereby completing the communication between the circuit board 11 and the controller of the intelligent optical distribution network device, the electrical connection mode may be non-contact connections such as Bluetooth or contact connections such as an RS485, I2C, RJ45 or USB socket.

One end 21 of the housing assembly 12 is provided with the optical fiber adapter mounting seat or groove 18 used for installing the optical fiber adapter, and the optical fiber adapter mounting seat 18 may be designed with mounting positions and optical fiber interface types such as SC, ST, FC and LC according to the need.

For fiber laser safety protection, generally the optical fiber adapter will not be installed vertical to a front panel to avoid eyes looking directly at lasers emitted by the optical fiber, and it is installed offset at a certain angle. However, offset angles of various optical distribution network device providers are inconsistent, and some device providers design left obliquely and some device providers design right obliquely. According to the scheme of reforming the intelligent fusion splice tray in the existing technology, different reformed upper cover plates and printed circuit boards can only be customized according to oblique directions and angles of optical fiber adapters of the unreformed fusion splice trays. However, with regard to the embodiment of the utility model, since the intelligent control apparatus provided by the embodiment of the utility model can be externally arranged, it is not affected by the offset directions and angles of the optical fiber adapters of the unreformed fusion splice trays.

The other end 22 of the housing assembly 12 is provided with the interspace 20, the optical fiber connecting to the optical fiber adapter is taken out and passes through the interspace 20, and then the optical fiber adapter is placed on the mounting seat or groove 18 of the housing assembly 12.

The circuit board 11 is fixedly installed within the housing assembly 12, and the housing assembly 12 plays a role of protecting the circuit board; the fastening piece 17 is fixed closed to the end 22 of the housing assembly 12; the fastening piece 17 is connected to the fusion splice tray body, and three fastening pieces are used in the embodiment, thus the fusion splice tray body and the apparatus of the embodiment can be firmly fixed.

The application method of the intelligent control apparatus provided in the embodiment 1 of the utility model will be described in detail in combination with a practical application scenario below.

The fastening piece 17 is embedded into an optical fiber adapter slot of the fusion splice tray body of the optical distribution network device, and it may also be correspondingly fixed at other positions of the fusion splice tray body according to the practical design conditions. One end 21 of the housing assembly 12 is provided with the optical fiber adapter mounting seat or groove 18 and the LED light port 19 which are used for installing the optical fiber adapter and the LED light, and the first port 15 is set at one side. The other end 22 of the housing assembly 12 leaves the interspace 20 for the optical fiber of the fusion splice tray body to pass through. When the optical distribution network device is reformed on site, only the optical fiber connected to the original optical fiber adapter needs to be taken out and passes through the interspace 20 to be placed at a suitable position, and the optical fiber adapter is placed on the mounting seat 18 or the groove 18 at one side of the housing assembly 12. The intelligent control apparatus according to the embodiment of the utility model is easy to operate during on-site reforming.

### Embodiment 2

The embodiment 2 of the utility model provides an intelligent optical distribution network device, which includes an optical distribution network device and various intelligent control apparatuses mentioned in the above embodiment 1.

Herein, the intelligent control apparatus is fixedly arranged on a fusion splice tray body of the optical distribution network device. The specific arrangement method may refer to the scheme provided in the embodiment 1 of the utility model.

### Embodiment 3

The embodiment 3 of the utility model provides an intelligent optical distribution network system, which includes the intelligent optical distribution network device mentioned in the above embodiment 2, an intelligent management terminal device and an intelligent optical distribution network management.

Herein, the intelligent optical distribution network device, the intelligent management terminal device and the intelligent optical distribution network management are orderly connected.

The utility model only takes the above embodiments as an example and it is not only limited to that, the ordinary people skilled in the art should understand that they can still make modifications to the technical schemes recorded in the foresaid various embodiments or make equivalent replacements to part or all of technical characteristics therein, and these modifications or replacements do not make the essence of the corresponding technical scheme depart from the scope of the technical schemes of various embodiments of the utility model.

The above description is only the preferred embodiments of the utility model, which is not used to limit the protection scope of the utility model.

## Claims

1. An intelligent control apparatus, comprising: a circuit board and a housing assembly;
wherein the housing assembly is a hollow structural body, and the circuit board is placed in the housing assembly;
a first communication interface and a second communication interface are set on the circuit board;
a first port and a second port are set on the housing assembly;
the first communication interface is electrically connected to an optical distribution network device via the first port; and the second communication interface is electrically connected to an optical fiber plug via the second port; and
the housing assembly is fixedly arranged on a fusion splice tray body of the optical distribution network device.

2. The apparatus according to claim 1, further comprising: at least one fastening piece;
one end of the fastening piece is fixedly connected to the housing assembly; and the other end of the fastening piece is fixedly connected to the fusion splice tray body of the optical distribution network device.

3. The apparatus according to claim 2, wherein, the fastening piece is a snap joint.

4. The apparatus according to any one of claims 1 to 3, wherein, a mounting seat or a groove used for placing an optical fiber adapter is set on the housing assembly.

5. The apparatus according to any one of claims 1 to 3, wherein, the housing assembly is a Light Emitting Diode LED light port is set on the housing assembly.

6. The apparatus according to any one of claims 1 to 3, wherein, an interspace used for an optical fiber to pass through is set on the housing assembly.

7. An intelligent optical distribution network device, comprising an optical distribution network device, and the intelligent control apparatus according to any one of claims 1 to 6; wherein,
the intelligent control apparatus is fixedly arranged on a fusion splice tray body of the optical distribution network device.

8. An intelligent optical distribution network system, comprising the intelligent optical distribution network device according to claim 7, an intelligent management terminal device and an intelligent optical distribution network management; wherein,
the intelligent optical distribution network device, the intelligent management terminal device and the intelligent optical distribution network management are orderly connected.
